# EUROPEAN PATENT SPECIFICATION

(11) **EP 4 386 255 B1**
(45) Date of publication and mention of the grant of the patent: **16.09.2026**
(21) Application number: 23861681.7
(22) Date of filing: 01.11.2023
(51) Int. Cl.: F17C 13/08, F17C 13/00

(54) **CONNECTING DEVICE FOR INNER AND OUTER CONTAINERS OF CRYOGENIC STORAGE TANK, AND CRYOGENIC STORAGE TANK**
VERBINDUNGSVORRICHTUNG FÜR INNEN- UND AUSSENBEHÄLTER EINES KRYOGENEN SPEICHERTANKS UND KRYOGENER SPEICHERTANK
DISPOSITIF DE RACCORDEMENT POUR RÉCIPIENTS INTÉRIEUR ET EXTÉRIEUR DE RÉSERVOIR DE STOCKAGE CRYOGÉNIQUE ET RÉSERVOIR DE STOCKAGE CRYOGÉNIQUE

(30) Priority: 21.10.2022 CN 202211299362
(43) Date of publication of application: 19.06.2024
(73) Proprietor: Nantong CIMC Energy Equipment Co., Ltd., Nantong, Jiangsu 226000 (CN); China International Marine Containers (Group) Co., Ltd., Shenzhen, Guangdong 518000 (CN); CIMC Enric Investment Holdings (Shenzhen) Co., Ltd., Shenzhen, Guangdong 518000 (CN)
(72) Inventor: HAI, Hang, Nantong, Jiangsu 226000 (CN); LUO, Yongxin, Nantong, Jiangsu 226000 (CN); ZHOU, Xiaoxiang, Nantong, Jiangsu 226000 (CN); ZHAO, Lin, Nantong, Jiangsu 226000 (CN); JIANG, Pingan, Nantong, Jiangsu 226000 (CN); SHEN, Weidong, Nantong, Jiangsu 226000 (CN); ZHANG, Yunkai, Nantong, Jiangsu 226000 (CN); ZHU, Xiaolin, Nantong, Jiangsu 226000 (CN); JU, Xiaofeng, Nantong, Jiangsu 226000 (CN)
(74) Representative: Studio Torta S.p.A.
(86) International application number: PCT/CN2023/129148
(87) International publication number: WO 2024/083264

(56) References cited:
- WO-A1-2022/094300
- CN-A- 102 590 770
- CN-A- 106 627 083
- CN-A- 107 716 948
- CN-A- 111 520 391
- CN-U- 215 636 502
- CN-U- 215 636 502
- US-A- 4 837 541

## Description

### TECHNICAL FIELD

The present disclosure relates to the field of cryogenic storage tank, and more particularly, to an inner and outer tank connection device for a cryogenic storage tank and a cryogenic storage tank.

### BACKGROUND

The cryogenic storage tank is a device used for storage and transportation of cryogenic medium. The liquefied gas stored and transported in industry includes liquefied natural gas, liquid oxygen, liquid nitrogen, liquid hydrogen, liquid helium and liquid argon.

The cryogenic storage tank usually includes a double-layer structure formed by an inner tank and an outer tank, and a space between the inner tank and the outer tank is a vacuum space, and the inner tank is connected to and supported in the outer tank by the inner and outer tank connection device.

In related technology, the inner tank is connected to and supported in the outer tank by setting a plurality of suspension belts, one ends of the suspension belts are fixed to the inner tank and the other ends of the suspension belts are connected to the outer tank. In the process of assembling and tightening the suspension belts, the suspension belts are prone to torsion and breakage, losing the connection and support function, resulting in a low reliability.

WO 2022/094300 A1 discloses a storage system comprising a storage tank configured to store fuel at a cryogenic temperature for a predetermined amount of time. The storage tank may have a plurality of layers comprising: a first layer comprising a pressure vessel for containing the fuel at a pressurized state; a second layer comprising insulation for the first layer; a third layer comprising a vapor barrier; and a fourth layer comprising a shell configured to maintain a rigidity of the storage tank.

CN 215636502U discloses a low-temperature container. The low-temperature container comprises a shell, an inner container and a supporting assembly. The supporting assembly comprises a movable support and a fixed support which are arranged at the two axial opposite ends of the inner container respectively. The movable support comprises a plurality of movable supporting pieces evenly distributed in the circumferential direction of the inner container, each movable supporting piece comprises a first hanging belt, and the two ends of each first hanging belt are rotationally connected with the inner wall of the shell and the outer wall of the inner container respectively. The fixed support comprises a plurality of fixed radial supporting pieces evenly distributed in the circumferential direction of the inner container and at least one axial supporting piece. The fixed radial supporting pieces comprise second hanging belts, the two ends of each second hanging belt are connected with the inner wall of the shell and the outer wall of the inner container respectively, the axial supporting piece comprises a third hanging belt which extends in the axial direction, and the two ends of each third hanging belt are connected with the inner wall of the shell and the outer wall of the inner container respectively.

US 4492090 A discloses a cryostat which is particularly useful for containing superconducting windings for a magnet to provide high strength magnetic fields for NMR imaging comprises a set of nested annular vessels in a suspension system which permits transport of the cryostat and magnet assembly with vacuum conditions intact. In particular, sets of transverse ties linking certain vessels to the next adjacent outer vessel are employed to prevent transverse motion of the cryostat assembly. Furthermore, during transport, a system of pins is employed to prevent axial motion, while at the same time minimizing thermal conductivity. During transport, the inner annular assemblies are locked in a fixed axial position which permits transport of the cryostat in a vertical position. A system of the present invention is therefore seen to satisfy the competing requirements for a strong internal support system for transport, but yet at the same time provides a suspension system which does not significantly impair the thermal insulation requirements of good cryostat design.

Thus, there is room for improvement and enhancement of the related art.

### SUMMARY

Accordingly, the present disclosure provides an inner and outer tank connection device for a cryogenic storage tank in accordance with claims which follow.

**In** the first aspect, the embodiment of the present disclosure provides an inner and outer tank connection device for a cryogenic storage tank, the cryogenic storage tank including an inner tank and an outer tank, the outer tank wrapping around the inner tank, the inner and outer tank connection device for connecting the inner tank and the outer tank;
the inner and outer tank connection device includes:
a suspension belt;
a first connection assembly for connecting the outer tank, the first connection assembly includes a first connection seat and a first connection member, and the first connection seat is configured for connecting the outer tank and the first connection seat is provided with a first limiting seat, the first connection member is rotatably connected to one end of the suspension belt, and the first connection member is provided with a first limiting portion, and the first limiting portion fits with the first limiting seat to limit the first connection member from twisting on the first connection seat with the suspension belt as a rotation axis; and
a second connection assembly for connecting the inner tank, where the second connection assembly is rotatably connected to another end of the suspension belt;
the first limiting seat is provided with a limiting guide groove fitting with the first limiting portion; the first limiting portion fits with the limiting guide groove to limit the first connection member from twisting on the first connection seat with the suspension belt as a rotation axis.

In the inner and outer tank connection device, the first connection member is provided with an adjusting structure for driving the first limiting portion to move along the limiting guide groove to adjust a distance between the first connection member and the second connection assembly.

In the inner and outer tank connection device, where the adjusting structure includes an adjusting nut and an adjusting screw projected from the first connection member, the adjusting screw is passed through the limiting guide groove, and the adjusting screw fits with the adjusting nut to enable the adjusting screw to drive the first limiting portion to move along the limiting guide groove to adjust the distance between the first connection member and the second connection assembly.

In the inner and outer tank connection device, where a locking projection is provided convexly in the first limiting seat, and the first connection member is provided with a locking table, and the locking table is abutted against the locking projection when the distance between the first connection member and the second connection assembly is adjusted to a maximum.

In the inner and outer tank connection device, where the first connection member is provided with a first through hole, the first connection seat is provided with a plurality of second through holes, and the first through hole on the first connection member is aligned with the second through holes in different positions; and
the first connection member is fixed by a screw passing through the first through hole and the second through hole to adjust the distance between the first connection member and the second connection assembly.

In the inner and outer tank connection device, where the suspension belt is in the form of a ring, the first connection assembly further includes a first pin, and the first pin is passed through the first connection member; the second connection assembly includes a second connection member and a second pin, and the second connection member is fixed to the inner tank; and the second pin is passed through the second connection member and is provided parallel to the first pin, and two ends of the suspension belt are sleeved on the first pin and the second pin, and are rotatable about the first pin and the second pin.

In the inner and outer tank connection device, where the first connection assembly further includes a first shaft sleeve, the second connection assembly further includes a second shaft sleeve, one end of the suspension belt is sleeved on the first pin through the first shaft sleeve, and another end of the suspension belt is sleeved on the second pin through the second shaft sleeve.

In the inner and outer tank connection device, where the first shaft sleeve is provided with a first stop portion and a second stop portion, the first stop portion and the second stop portion are spaced apart along an axis of the first pin, an end of the suspension belt is sleeved between the first stop portion and the second stop portion, and the second shaft sleeve is provided with a third stop portion and a fourth stop portion, the third stop portion and the fourth stop portion are spaced apart along an axis of the second pin, and another end of the suspension belt is sleeved between the third stop portion and the fourth stop portion.

In the inner and outer tank connection device, where the second connection assembly further includes a second connection seat, the second connection seat is provided with a second limiting seat, and the second connection member is provided with a second limiting portion, the second limiting portion fits with the second limiting seat to limit the second connection member from twisting on the second connection seat with the suspension belt as the rotation axis, and the second connection member is connected to the inner tank through the second connection seat.

In the inner and outer tank connection device, where the suspension belt is made of a fiber-reinforced resin composite material.

In the inner and outer tank connection device, where fibers in the fiber-reinforced resin composite material are carbon fibers, aramid fibers or glass fibers; a resin in the fiber-reinforced resin composite material is an epoxy resin, a polyamide resin or a high-density polyethylene resin.

In a second aspect, the present disclosure provides a cryogenic storage tank, including an inner tank, an outer tank, and a plurality of inner and outer tank connection devices for any one of the cryogenic storage tanks as mentioned above, where the outer tank wraps around the inner tank, the inner and outer tank connection device connects the inner tank and the outer tank; and the plurality of the inner and outer tank connection device are provided at an end portion of the inner tank, and spaced apart along a circumferential direction of the inner tank, and at least two inner and outer tank connection devices are provided on an upper side of a horizontal axis plane of the inner tank.

As can be seen from the above technical solution, the present disclosure has at least the following advantages and positive effects:
Compared with the related art, the inner and outer tank connection device of the present disclosure, the first connection assembly of the inner and outer tank connection device connects the outer tank, the second connection assembly connects the inner tank, one end of the suspension belt is rotatably connected to the first connection member of the first connection assembly, and the other end of the suspension belt is rotatably connected to the second connection assembly, and the first limiting portion on the first connection member fits with the first limiting seat of the first connection seat to limit the first connection member from twisting on the first connection seat with the suspension belt as the rotation axis, thereby preventing the suspension belt from twisting and breaking, thus the reliability of the inner and outer tank connection device and its cryogenic storage tank is improved, and two ends of the suspension belt are rotatably connected to the first connection assembly and the second connection assembly, so that when the displacement of the inner tank occurs due to thermal expansion or contraction, the suspension belt can rotate with respect to the first and second connection assemblies to reduce the force on the suspension belt caused by the displacement of the inner tank, thereby effectively preventing the suspension belt from twisting and breaking, and improving the reliability of the inner and outer tank connection device and the cryogenic storage tank.

### BRIEF DESCRIPTION OF THE DRAWINGS

FIG. 1 is a structural view of a cryogenic storage tank of the present disclosure.
FIG. 2 is a front view of FIG. 1.
FIG. 3 is a structural view of an inner and outer tank connection device of the cryogenic storage tank of the present disclosure.
FIG. 4 is a sectional view at A-A line in FIG. 3.
FIG. 5 is a partial enlarged view of a in FIG. 4.
FIG. 6 is a structural view of the inner and outer tank connection device of the cryogenic storage tank of the present disclosure viewing from another angle.
FIG. 7 is a sectional view at B-B line in FIG. 6.
FIG. 8 is a structural view showing connection between a first connection member and a suspension belt of the present disclosure.
FIG. 9 is a structural view showing connection between the first connection member and a suspension belt of the present disclosure viewing from another angle.
FIG. 10 is a structural view of connection of the second connection member to a suspension belt according to another embodiment of the present disclosure.

### DETAILED DESCRIPTION OF THE EMBODIMENTS

The present disclosure provides an inner and outer tank connection device for a cryogenic storage tank and a cryogenic storage tank. In order to make the purpose, technical program and effect of the present disclosure clearer and more explicit, the present disclosure is described in further detail hereinafter with reference to the accompanying drawings and by way of embodiments. It should be understood that the specific embodiments described herein are only for the purpose of explaining the present disclosure, and are not intended to limit the present disclosure.

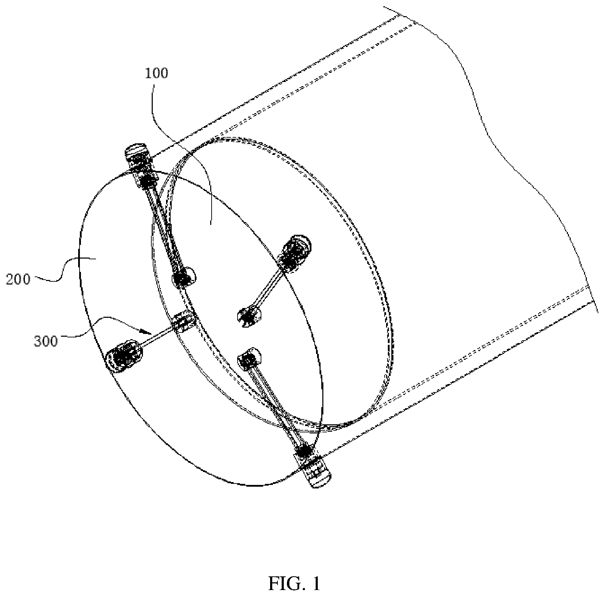

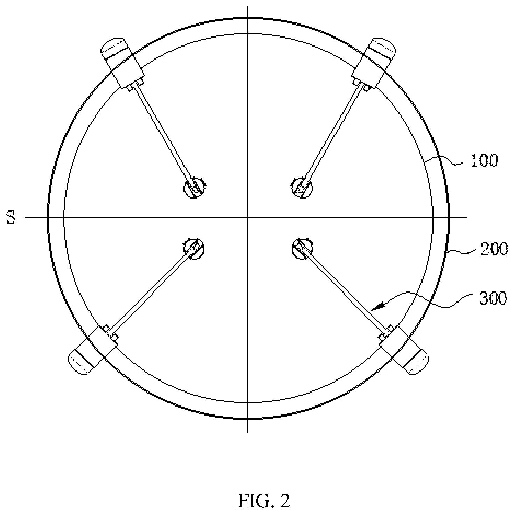

The cryogenic storage tank is a device for storing and transporting a cryogenic medium. Referring to FIGS. 1 and 2, the cryogenic storage tank includes an inner tank 100, an outer tank 200, and a plurality of inner and outer tank connection devices 300. The inner tank 100 is used to store the cryogenic medium, the outer tank 200 wraps around the inner tank 100, and a vacuum space is formed between the inner tank 100 and the outer tank 200. The inner and outer tank connection device 300 are used to connect the inner tank 100 and the outer tank 200. The plurality of inner and outer tank connection devices 300 are provided at an end of the inner tank 100, and spaced apart along a circumferential direction of the inner tank 100, and at least two inner and outer tank connection devices 300 are provided at an upper side of a horizontal axis plane of the inner tank 100. Each inner and outer tank connection device 300 connects the inner tank 100 and the outer tank 200 and supports the inner tank 100 in the outer tank 200. The horizontal axis plane of the inner tank 100 is horizontal and passes through the axis of the inner tank 100, such as the plane S in FIG. 2.

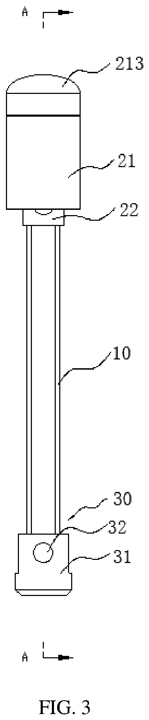

Referring to FIGS. 2 to 4, each the inner and outer tank connection device 300 of the cryogenic storage tank includes a suspension belt 10, a first connection assembly 20, and a second connection assembly 30.

One end of the suspension belt 10 is rotatably connected to the first connection assembly 20 and the other end of the suspension belt 10 is rotatably connected to the second connection assembly 30. When the displacement of the inner tank 100 occurs due to thermal expansion and contraction, the rotatably connected suspension belt 10 can reduce pulling force of the suspension belt 10 caused by the displacement of the inner tank 100, thereby reducing the possibility of damage to the suspension belt 10.

The suspension belt 10 is made of a fiber-reinforced resin composite material. The fibers in the fiber-reinforced resin composite material may be carbon fibers, aramid fibers, or glass fibers. The resin may be an epoxy resin, a polyamide resin, or a high-density polyethylene resin. Due to the low thermal conductivity of the fiber-reinforced resin composite material, the suspension belt 10 has a small thermal conductivity and is resistant to low temperature, fatigue, and high reliability.

The temperature of the cryogenic medium stored in the cryogenic storage tank is generally not less than -196 °C, which is the liquefaction temperature of liquid nitrogen, whereas the temperature of an ultra-low temperature medium reaches below -253 °C. As the liquid hydrogen and liquid helium medium have a low boiling point, low density, and a small latent heat of vaporization, the cryogenic storage tank is required to have stronger thermal insulation performance. Taking the tank of the same structure as an example, the standard heat leakage of the tank filled with the liquid hydrogen is 1.16 times that of the tank filled with liquid nitrogen, static evaporation rate of the tank filled with the liquid hydrogen is 5.87 times that of the tank filled with the liquid nitrogen. There are three main aspects of heat leakage from insulation of cryogenic storage tanks: the heat leakage from supports of the inner and outer tank 200, heat leakage from an insulation layer, and heat leakage from pipeline. The suspension belt 10 in the present disclosure is made of a fiber-reinforced resin composite material with a small coefficient of thermal conductivity, which can effectively reduce the heat leakage from the supports of the inner and outer tank connection device 300 and improve the thermal insulation performance of the cryogenic storage tank.

Referring to FIGS. 2 to 4, the first connection assembly 20 connects the outer tank 200. The first connection assembly 20 includes a first connection seat 21 and a first connection member 22. The first connection seat 21 connects the outer tank 200. The first connection seat 21 is provided with a first limiting seat 211. The first connection member 22 is rotatably connected to one end of the suspension belt 10. The first connection member 22 is provided with a first limiting portion 221. The first limiting portion 221 fits with the first limiting seat 211, so that the first connection member 22 is limited in the first limiting seat 211 to limit the first connection member 22 from twisting in the first connection seat 21 with the suspension belt 10 as the rotation axis, thereby preventing the suspension belt 10 from twisting and breaking, and improving the reliability of the inner and outer tank connection device 300.

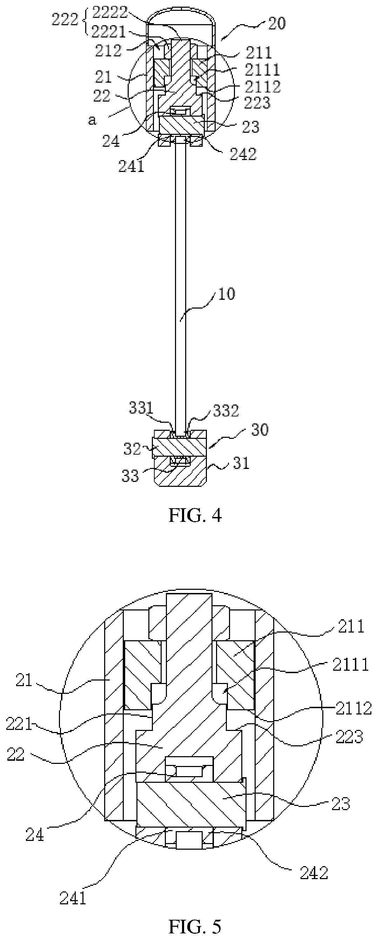

Referring to FIGS. 4 and 5, a limiting guide groove 2111 is provided in the first limiting seat 211, and a first limiting portion 221 fits with the limiting guide groove 2111. Since the first limiting portion 221 fits with the limiting guide groove 2111 to limit the first connection member 22 from twisting in the first connection seat 21 with the suspension belt 10 as the rotation axis, thereby effectively preventing the suspension belt 10 from twisting and breaking.

The first connection member 22 is provided with an adjusting structure 222, which drives the first limiting portion 221 to move along the limiting guide groove 2111 for adjusting the distance between the first connection member 22 and the second connection assembly 30, and applying a pre-tightening force to the suspension belt 10. A worker may adjust the position of the first limiting portion 221 in the limiting guide groove 2111 by the adjusting structure 222, to adjust the distance between the first connection member 22 and the second connection assembly 30, and to adjust the looseness and tightness of the suspension belt 10. A pre-tightening force is applied to the suspension belt 10, so as to keep the suspension belt 10 in a tensile state, and facilitate the assembly.

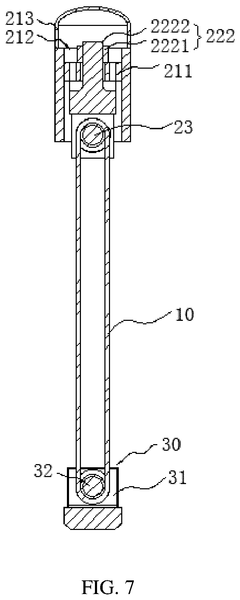

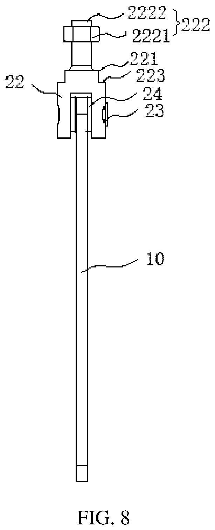

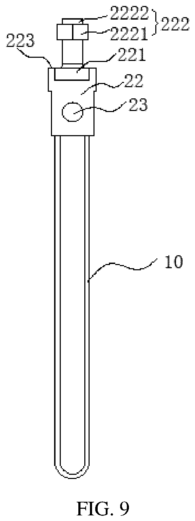

Referring to FIGS. 4, 5, and 7 to 9, the adjusting structure 222 includes an adjusting nut 2221 and an adjusting screw 2222. The adjusting screw 2222 projects from the first connection member 22 and passes through the limiting guide groove 2111. The adjusting screw 2222 fits with the adjusting nut 2221, so that the adjusting screw 2222 can drive the first limiting portion 221 to move along the limiting guide groove 2111, to adjust the distance between the first connection member 22 and the second connection assembly 30, and apply a pre-tightening force to the suspension belt 10.

Specifically, when the adjusting nut 2221 fits with the adjusting screw 2222 to be tightened, the adjusting screw 2222 passes through the adjusting nut 2221 and protrudes from the adjusting nut 2221 to shorten the distance between the first connection member 22 and the second connection assembly 30, to tighten the suspension belt 10; when the adjusting nut 2221 rotates in the opposite direction, the adjusting screw 2222 is retracted in the opposite direction, to increase the distance between the first connection member 22 and the second connection assembly 30, such that the suspension belt 10 changes from a tightened state to a relaxed state. The limiting guide groove 2111 limits the first limiting portion 221 from twisting, while guides the movement of the convex extension and retraction of the adjusting screw 2222.

In this embodiment, a locking protrusion 2112 is provided convexly in the first limiting seat 211. A locking table 223 is provided on the first connection member 22. When the distance between the first connection member 22 and the second connection assembly 30 is adjusted to be a maximum, the locking table 223 abuts against the locking protrusion 2112. The locking table 223 abuts against the locking projection 2112 to limit the maximum distance between the first connection member 22 and the second connection assembly 30, so as not to overstretch the suspension belt 10, thereby further improving the reliability of the inner and outer tank connection device 300.

The limiting guide groove 2111 is provided on the locking projection 2112, and the adjusting screw 2222 passes through the limiting guide groove 2111. One of the two opposite sides of the locking projection 2112 abuts against the locking table 223, and the other side abuts against the adjusting nut 2221. The adjusting nut 2221 fits with the adjusting screw 2222 to rotate, such that the adjusting screw 2222 extends out the locking projection 2112 or retracts the locking projection 2112, to adjust the position of the first limiting portion 221 in the limiting guide groove 2111.

In other embodiments, first through holes may be provided on the first connection member 22 and a plurality of second through holes on the first connection seat 21. The first through holes on the first connection member 22 are adjusted to align with the second holes at different positions, the first connection member 22 is fixed by screws passing through the first through holes and the second through holes, to adjust the position of the first connection member 22 in the limiting guide groove 2111, and adjust the distance between the first connection member 22 and the second connection assembly 30. In this embodiment, the adjusting screw 2222 is used to fit with the adjusting nut 2221, which is simple in structure and more convenient in operation.

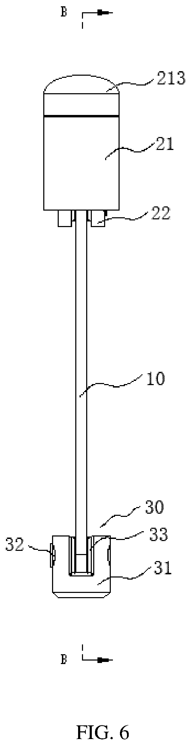

Referring to FIGS. 4 to 7, an opening 212 and a sealing plate 213 may be provided on the side of the first connection seat 21 away from the suspension belt 10. When the suspension belt 10 is adjusted to a suitable looseness or tightness through the cooperation of the adjusting screw 2222 and the adjusting nut 2221, the sealing plate 213 is covered on the opening 212, to seal the side of the first connection seat 21 away from the suspension belt 10.

Referring to FIGS. 4, 8 and 9, the suspension belt 10 is in the form of a ring. The first connection assembly 20 further includes a first pin 23. The first pin 23 passes through the first connection member 22. One end of the suspension belt 10 is sleeved on the first pin 23 and is rotatable about the first pin 23. The first pin 23 has a pre-tensioning function for the suspension belt 10.

The first connection assembly 20 may also include a first shaft sleeve 24, one end of the suspension belt 10 is sleeved on the first pin 23 via the first shaft sleeve 24. The first shaft sleeve 24 can reduce the friction force of the suspension belt 10 rotating about the first pin 23 and reduce the wear and tear of the suspension belt 10.

The first shaft sleeve 24 is provided with a first stop portion 241 and a second stop portion 242. The first stop portion 241 and the second stop portion 242 are spaced apart along the axis of the first pin 23. One end of the suspension belt 10 is sleeved between the first stop portion 241 and the second stop portion 242 for preventing the suspension belt 10 from slipping along the axis of the first pin 23, thereby improving the connection stability of the inner and outer tank connection device 300.

The second connection assembly 30 includes a second connection member 31 and a second pin 32. The second connection member 31 is connected to the inner tank 100. The second pin 32 is passed through the second connection member 31 and is provided parallel to the first pin 23. The other end of the suspension belt 10 is sleeved on the second pin 32 and is rotatable about the second pin 32. The second pin 32 has a pre-tensioning function for the suspension belt 10.

Since the suspension belt 10 is rotatable about the first pin 23 and the second pin 32, such that the suspension belt 10 can rotate to reduce the pulling force of the inner tank 100 on the suspension belt 10 when the displacement of the inner tank 100 occurs due to thermal expansion and contraction, the possibility of breakage of the suspension belt 10 is reduced.

The second connection assembly 30 may also include a second shaft sleeve 33, one end of the suspension belt 10 is sleeved on the second pin 32 via the second shaft sleeve 33. The second shaft sleeve 33 reduces the friction force of the suspension belt 10 rotating about the first pin 23 and reduces the wear and tear of the suspension belt 10.

The second shaft sleeve 33 is provided with a third stop portion 331 and a fourth stop portion 332. The third stop portion 331 and the fourth stop portion 332 are spaced apart along the axis of the second pin 32. The other end of the suspension belt 10 is sleeved between the third stop portion 331 and the fourth stop portion 332 for preventing the suspension belt 10 from sliding along the axis of the second pin 32, thereby improving the connection stability of the inner and outer tank connection device 300.

When the adjusting screw 2222 of the adjusting structure 222 fits with the adjusting nut 2221 to drive the first limiting portion 221 to move in the limiting guide groove 2111, the distance between the first connection member 22 and the second connection assembly 30 is adjusted, i.e., the distance between the first pin 23 and the second pin 32 is adjusted to adjust the looseness or tightness of the suspension belt 10.

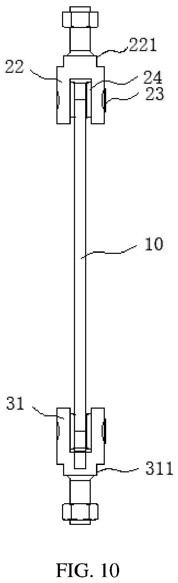

In another embodiment, referring to FIG. 10, the structure of the second connection assembly 30 may be the same as the structure of the first connection assembly 20. The second connection assembly 30 further includes a second connection seat. The second connection member 31 is fixedly connected to the inner tank 100 via the second connection seat. The second connection seat is provided with a second limiting seat. The second connection member 31 is provided with a second limiting portion 311, and the second limiting portion 311 fits with the second limiting seat to limit the second connection member 31 from twisting on the second connection seat with the suspension belt 10 as the rotation axis.

In the present disclosure, the first connection assembly 20 of the inner and outer tank connection device 300 connects the outer tank 200, the second connection assembly 30 connects the inner tank 100, one end of the suspension belt 10 is rotatably connected to the first connection member 22 of the first connection assembly 20, and the other end of the suspension belt 10 is rotatably connected to the second connection assembly 30, and the first limiting portion 221 on the first connection member 22 fits with the first limiting seat 211 of the first connection seat 21 to limit the first connection member 22 from twisting on the first connection seat 21 with the suspension belt 10 as the rotation axis, thereby preventing the suspension belt 10 from twisting and breaking, and improving the reliability of the inner and outer tank connection device 300 and the cryogenic storage tank, and two ends of the suspension belt 10 are rotatably connected to the first connection assembly 20 and the second connection assembly 30, when the displacement of the inner tank 100 occurs due to thermal expansion and contraction, the suspension belt 10 can rotate relative to the first connection assembly 20 and the second connection assembly 30, to reduce the force on the suspension belt 10 caused by the displacement of the inner tank 100, thereby effectively preventing the suspension belt 10 from breaking, and improving the reliability of the inner and outer tank connection device 300 and the cryogenic storage tank.

## Claims

1. An inner and outer tank connection device (300) for a cryogenic storage tank, the cryogenic storage tank comprising an inner tank (100) and an outer tank (200), the outer tank (200) wrapping around the inner tank (100), the inner and outer tank connection device (300) for connecting the inner tank (100) and the outer tank (200);
wherein the inner and outer tank connection device (300) comprises:
a suspension belt (10);
a first connection assembly (20) for connecting the outer tank (200), wherein the first connection assembly (20) comprises a first connection seat (21) and a first connection member (22), and the first connection seat (21) is configured for connecting the outer tank (200) and the first connection seat (21) is provided with a first limiting seat (211), wherein the first connection member (22) is rotatably connected to one end of the suspension belt (10), and the first connection member (22) is provided with a first limiting portion (221), and the first limiting portion (221) fits with the first limiting seat (211) to limit the first connection member (22) from twisting on the first connection seat (21) with the suspension belt (10) as a rotation axis; and
a second connection assembly (30) for connecting the inner tank (100), wherein the second connection assembly (30) is rotatably connected to another end of the suspension belt (10);
**characterised in that**
the first limiting seat (211) is provided with a limiting guide groove (2111) fitting with the first limiting portion (221); the first limiting portion (221) fits with the limiting guide groove (2111) to limit the first connection member (22) from twisting on the first connection seat (21) with the suspension belt (10) as a rotation axis.

2. The inner and outer tank connection device (300) according to claim 1, **characterized in that** the first connection member (22) is provided with an adjusting structure (222) for driving the first limiting portion (221) to move along the limiting guide groove (2111) to adjust a distance between the first connection member (22) and the second connection assembly (30).

3. The inner and outer tank connection device (300) according to claim 2, **characterized in that** the adjusting structure (222) comprises an adjusting nut (2221) and an adjusting screw (2222) projected from the first connection member (22), wherein the adjusting screw (2222) is passed through the limiting guide groove (2111), and the adjusting screw (2222) fits with the adjusting nut (2221) to enable the adjusting screw (2222) to drive the first limiting portion (221) to move along the limiting guide groove (2111) to adjust the distance between the first connection member (22) and the second connection assembly (30).

4. The inner and outer tank connection device (300) according to claim 3, **characterized in that** a locking projection (2112) is provided convexly in the first limiting seat (211), and the first connection member (22) is provided with a locking table (223), wherein the locking table (223) is abutted against the locking projection (2112) when the distance between the first connection member (22) and the second connection assembly (30) is adjusted to a maximum.

5. The inner and outer tank connection device (300) according to claim 2, **characterized in that** the first connection member (22) is provided with a first through hole, the first connection seat (21) is provided with a plurality of second through holes, and the first through hole on the first connection member (22) is aligned with the second through holes in different positions; and
wherein the first connection member (22) is fixed by a screw passing through the first through hole and the second through hole to adjust the distance between the first connection member (22) and the second connection assembly (30).

6. The inner and outer tank connection device (300) according to any one of claims 1 to 5, **characterized in that** the suspension belt (10) is in the form of a ring,
wherein the first connection assembly (20) further comprises a first pin (23), and the first pin (23) is passed through the first connection member (22);
wherein the second connection assembly (30) comprises a second connection member (31) and a second pin (32), and the second connection member (31) is fixed to the inner tank (100); and
wherein the second pin (32) is passed through the second connection member (31) and is provided parallel to the first pin (23), and two ends of the suspension belt (10) are sleeved on the first pin (23) and the second pin (32), and are rotatable about the first pin (23) and the second pin (32).

7. The inner and outer tank connection device (300) according to claim 6, **characterized in that** the first connection assembly (20) further comprises a first shaft sleeve (24), and the second connection assembly (30) further comprises a second shaft sleeve (33), wherein one end of the suspension belt (10) is sleeved on the first pin (23) through the first shaft sleeve (24), and another end of the suspension belt (10) is sleeved on the second pin (32) through the second shaft sleeve (33).

8. The inner and outer tank connection device (300) according to claim 7, **characterized in that** the first shaft sleeve (24) is provided with a first stop portion (241) and a second stop portion (242), wherein the first stop portion (241) and the second stop portion (242) are spaced apart along an axis of the first pin (23), and an end of the suspension belt (10) is sleeved between the first stop portion (241) and the second stop portion (242), and wherein the second shaft sleeve (33) is provided with a third stop portion (331) and a fourth stop portion (332), wherein the third stop portion (331) and the fourth stop portion (332) are spaced apart along an axis of the second pin (32), and another end of the suspension belt (10) is sleeved between the third stop portion (331) and the fourth stop portion (332).

9. The inner and outer tank connection device (300) according to claim 6, **characterized in that** the second connection assembly (30) further comprises a second connection seat, the second connection seat is provided with a second limiting seat, and the second connection member (31) is provided with a second limiting portion (331), wherein the second limiting portion fits with the second limiting seat to limit the second connection member (31) from twisting on the second connection seat with the suspension belt (10) as the rotation axis, and the second connection member (31) is connected to the inner tank (100) through the second connection seat.

10. The inner and outer tank connection device (300) according to any one of claims 1 to 9, **characterized in that** the suspension belt (10) is made of a fiber-reinforced resin composite material.

11. The inner and outer tank connection device (300) according to claim 10, **characterized in that** fibers in the fiber-reinforced resin composite material are carbon fibers, aramid fibers or glass fibers, wherein a resin in the fiber-reinforced resin composite material is an epoxy resin, a polyamide resin or a high-density polyethylene resin.

12. A cryogenic storage tank, comprising an inner tank (100), an outer tank (200), and a plurality of inner and outer tank connection devices (300) for the cryogenic storage tank according to any one of claims 1 to 11, **characterized in that** the outer tank (200) wraps around the inner tank (100), the inner and outer tank connection device (300) connects the inner tank (100) and the outer tank (200); and
wherein the plurality of the inner and outer tank connection device (300) are provided at an end portion of the inner tank (100), and spaced apart along a circumferential direction of the inner tank (100), and at least two inner and outer tank connection devices (300) are provided on an upper side of a horizontal axis plane of the inner tank (100).

## Patentansprüche

1. Innentank- und Außentank-Verbindungsvorrichtung (300) für einen kryogenen Speichertank, wobei der kryogene Speichertank einen Innentank (100) und einen Außentank (200) umfasst, wobei der Außentank (200) den Innentank (100) umgibt, wobei die Innentank- und Außentank-Verbindungsvorrichtung (300) zum Verbinden des Innentanks (100) und des Außentanks (200) vorgesehen ist;
wobei die Innen- und Außentank-Verbindungsvorrichtung (300) umfasst:
einen Aufhängegurt (10);
eine erste Verbindungsanordnung (20) zum Verbinden des Außentanks (200), wobei die erste Verbindungsanordnung (20) einen ersten Verbindungssitz (21) und ein erstes Verbindungselement (22) umfasst, und der erste Verbindungssitz (21) zum Verbinden des Außentanks (200) konfiguriert ist und der erste Verbindungssitz (21) mit einem ersten Begrenzungssitz (211) versehen ist, wobei das erste Verbindungselement (22) drehbar mit einem Ende des Aufhängegurts (10) verbunden ist, und das erste Verbindungselement (22) mit einem ersten Begrenzungsabschnitt (221) versehen ist, und der erste Begrenzungsabschnitt (221) mit dem ersten Begrenzungssitz (211) zusammenpasst, um ein Verdrehen des ersten Verbindungselements (22) auf dem ersten Verbindungssitz (21) mit dem Aufhängegurt (10) als eine Drehachse zu begrenzen; und
eine zweite Verbindungsanordnung (30) zum Verbinden des Innentanks (100), wobei die zweite Verbindungsanordnung (30) drehbar mit einem anderen Ende des Aufhängegurts (10) verbunden ist;
**dadurch gekennzeichnet, dass**
der erste Begrenzungssitz (211) mit einer Begrenzungsführungsnut (2111) versehen ist, die mit dem ersten Begrenzungsabschnitt (221) zusammenpasst; der erste Begrenzungsabschnitt (221) mit der Begrenzungsführungsnut (2111) zusammenwirkt, um ein Verdrehen des ersten Verbindungselements (22) auf dem ersten Verbindungssitz (21) mit dem Aufhängegurt (10) als Drehachse zu begrenzen.

2. Innen- und Außentank-Verbindungsvorrichtung (300) nach Anspruch 1, **dadurch gekennzeichnet, dass** das erste Verbindungselement (22) mit einer Justierstruktur (222) versehen ist, um den ersten Begrenzungsabschnitt (221) anzutreiben, sich entlang der Begrenzungsführungsnut (2111) zu bewegen, um einen Abstand zwischen dem ersten Verbindungselement (22) und der zweiten Verbindungsanordnung (30) zu justieren.

3. Innen- und Außentank-Verbindungsvorrichtung (300) nach Anspruch 2, **dadurch gekennzeichnet, dass** die Justierstruktur (222) eine Justiermutter (2221) und eine Justierschraube (2222) umfasst, die von dem ersten Verbindungselement (22) vorsteht, wobei die Justierschraube (2222) durch die Begrenzungsführungsnut (2111) geführt ist und die Justierschraube (2222) mit der Justiermutter (2221) zusammenpasst, um es der Justierschraube (2222) zu ermöglichen, den ersten Begrenzungsabschnitt (221) anzutreiben, sich entlang der Begrenzungsführungsnut (2111) zu bewegen, um den Abstand zwischen dem ersten Verbindungselement (22) und der zweiten Verbindungsanordnung (30) zu justieren.

4. Innen- und Außentank-Verbindungsvorrichtung (300) nach Anspruch 3, **dadurch gekennzeichnet, dass** ein Verriegelungsvorsprung (2112) konvex in dem ersten Begrenzungssitz (211) bereitgestellt ist, und das erste Verbindungselement (22) mit einem Verriegelungstisch (223) versehen ist, wobei der Verriegelungstisch (223) gegen den Verriegelungsvorsprung (2112) anliegt, wenn der Abstand zwischen dem ersten Verbindungselement (22) und der zweiten Verbindungsanordnung (30) auf ein Maximum justiert ist.

5. Innen- und Außentank-Verbindungsvorrichtung (300) nach Anspruch 2, **dadurch gekennzeichnet, dass** das erste Verbindungselement (22) mit einem ersten Durchgangsloch versehen ist, der erste Verbindungssitz (21) mit einer Vielzahl von zweiten Durchgangslöchern versehen ist und das erste Durchgangsloch an dem ersten Verbindungselement (22) mit den zweiten Durchgangslöchern in verschiedenen Positionen ausgerichtet ist; und
wobei das erste Verbindungselement (22) durch eine Schraube befestigt ist, die durch das erste Durchgangsloch und das zweite Durchgangsloch verläuft, um den Abstand zwischen dem ersten Verbindungselement (22) und der zweiten Verbindungsanordnung (30) zu justieren.

6. Innen- und Außentank-Verbindungsvorrichtung (300) nach einem der Ansprüche 1 bis 5, **dadurch gekennzeichnet, dass** der Aufhängegurt (10) in Form eines Rings ausgebildet ist,
wobei die erste Verbindungsanordnung (20) ferner einen ersten Stift (23) umfasst und der erste Stift (23) durch das erste Verbindungselement (22) geführt ist;
wobei die zweite Verbindungsanordnung (30) ein zweites Verbindungselement (31) und einen zweiten Stift (32) umfasst, und das zweite Verbindungselement (31) an dem Innentank (100) befestigt ist; und
wobei der zweite Stift (32) durch das zweite Verbindungselement (31) geführt ist und parallel zu dem ersten Stift (23) bereitgestellt ist, und zwei Enden des Aufhängegurts (10) auf den ersten Stift (23) und den zweiten Stift (32) aufgeschoben sind und um den ersten Stift (23) und den zweiten Stift (32) drehbar sind.

7. Innen- und Außentank-Verbindungsvorrichtung (300) nach Anspruch 6, **dadurch gekennzeichnet, dass** die erste Verbindungsanordnung (20) ferner eine erste Wellenhülse (24) umfasst, und die zweite Verbindungsanordnung (30) ferner eine zweite Wellenhülse (33) umfasst, wobei ein Ende des Aufhängegurts (10) durch die erste Wellenhülse (24) auf den ersten Stift (23) aufgesteckt ist und ein anderes Ende des Aufhängegurts (10) durch die zweite Wellenhülse (33) auf den zweiten Stift (32) aufgesteckt ist.

8. Innen- und Außentank-Verbindungsvorrichtung (300) nach Anspruch 7, **dadurch gekennzeichnet, dass** die erste Wellenhülse (24) mit einem ersten Anschlagabschnitt (241) und einem zweiten Anschlagabschnitt (242) versehen ist, wobei der erste Anschlagabschnitt (241) und der zweite Anschlagabschnitt (242) entlang einer Achse des ersten Stifts (23) beabstandet sind, und ein Ende des Aufhängegurts (10) zwischen dem ersten Anschlagabschnitt (241) und dem zweiten Anschlagabschnitt (242) aufgeschoben ist, und wobei die zweite Wellenhülse (33) mit einem dritten Anschlagabschnitt (331) und einem vierten Anschlagabschnitt (332) versehen ist, wobei der dritte Anschlagabschnitt (331) und der vierte Anschlagabschnitt (332) entlang einer Achse des zweiten Stifts (32) beabstandet sind, und ein anderes Ende des Aufhängegurts (10) zwischen dem dritten Anschlagabschnitt (331) und dem vierten Anschlagabschnitt (332) aufgeschoben ist.

9. Innen- und Außentank-Verbindungsvorrichtung (300) nach Anspruch 6, **dadurch gekennzeichnet, dass** die zweite Verbindungsanordnung (30) ferner einen zweiten Verbindungssitz umfasst, der zweite Verbindungssitz mit einem zweiten Begrenzungssitz versehen ist, und das zweite Verbindungselement (31) mit einem zweiten Begrenzungsabschnitt (331) versehen ist, wobei der zweite Begrenzungsabschnitt mit dem zweiten Begrenzungssitz zusammenpasst, um ein Verdrehen des zweiten Verbindungselements (31) auf dem zweiten Verbindungssitz mit dem Aufhängegurt (10) als Drehachse zu begrenzen, und das zweite Verbindungselement (31) durch den zweiten Verbindungssitz mit dem Innentank (100) verbunden ist.

10. Innen- und Außentank-Verbindungsvorrichtung (300) nach einem der Ansprüche 1 bis 9, **dadurch gekennzeichnet, dass** der Aufhängegurt (10) aus einem faserverstärkten Harz-Verbundwerkstoff hergestellt ist.

11. Innen- und Außentank-Verbindungsvorrichtung (300) nach Anspruch 10, **dadurch gekennzeichnet, dass** Fasern in dem faserverstärkten Harz-Verbundwerkstoff Kohlenstofffasern, Aramidfasern oder Glasfasern sind, wobei ein Harz in dem faserverstärkten Harz-Verbundwerkstoff ein Epoxidharz, ein Polyamidharz oder ein Harz aus Polyethylen hoher Dichte ist.

12. Kryogener Speichertank, umfassend einen Innentank (100), einen Außentank (200) und eine Vielzahl von Innen- und Außentank-Verbindungsvorrichtungen (300) für den kryogenen Speichertank nach einem der Ansprüche 1 bis 11, **dadurch gekennzeichnet, dass** der Außentank (200) den Innentank (100) umgibt, die Innen- und Außentank-Verbindungsvorrichtung (300) den Innentank (100) und den Außentank (200) verbindet; und
wobei die Vielzahl der Innen- und Außentank-Verbindungsvorrichtungen (300) an einem Endabschnitt des Innentanks (100) bereitgestellt und entlang einer Umfangsrichtung des Innentanks (100) beabstandet sind, und mindestens zwei Innen- und Außentank-Verbindungsvorrichtungen (300) auf einer Oberseite einer horizontalen Achsenebene des Innentanks (100) bereitgestellt sind.

## Revendications

1. Dispositif de raccordement de réservoir interne et externe (300) pour un réservoir de stockage cryogénique, le réservoir de stockage cryogénique comprenant un réservoir interne (100) et un réservoir externe (200), le réservoir externe (200) entourant le réservoir interne (100), le dispositif de raccordement de réservoir interne et externe (300) permettant de raccorder le réservoir interne (100) et le réservoir externe (200) ;
dans lequel le dispositif de raccordement de réservoir interne et externe (300) comprend :
une sangle de suspension (10) ;
un premier ensemble de liaison (20) pour relier le réservoir externe (200), dans lequel le premier ensemble de liaison (20) comprend un premier siège de liaison (21) et un premier élément de liaison (22), et le premier siège de liaison (21) est conçu pour relier le réservoir externe (200) et le premier siège de liaison (21) est pourvu d'un premier siège de limitation (211), dans lequel le premier élément de liaison (22) est relié de manière rotative à une extrémité de la sangle de suspension (10), et le premier élément de liaison (22) est pourvu d'une première partie de limitation (221), et la première partie de limitation (221) s'adapte au premier siège de limitation (211) pour empêcher le premier élément de liaison (22) de se tordre sur le premier siège de liaison (21) avec la sangle de suspension (10) comme axe de rotation ; et
un second ensemble de liaison (30) permettant de relier le réservoir interne (100), dans lequel le second ensemble de liaison (30) est relié de manière rotative à une autre extrémité de la sangle de suspension (10) ;
**caractérisé en ce que**
le premier siège de limitation (211) est pourvu d'une rainure de guidage de limitation (2111) s'adaptant à la première partie de limitation (221) ; la première partie de limitation (221) s'adapte à la rainure de guidage de limitation (2111) pour empêcher le premier élément de liaison (22) de se tordre sur le premier siège de liaison (21) avec la sangle de suspension (10) comme axe de rotation.

2. Dispositif de raccordement de réservoir interne et externe (300) selon la revendication 1, **caractérisé en ce que** le premier élément de liaison (22) est pourvu d'une structure de réglage (222) pour entraîner la première partie de limitation (221) à se déplacer le long de la rainure de guidage (2111) pour régler une distance entre le premier élément de liaison (22) et le second ensemble de liaison (30).

3. Dispositif de raccordement de réservoir interne et externe (300) selon la revendication 2, **caractérisé en ce que** la structure de réglage (222) comprend un écrou de réglage (2221) et une vis de réglage (2222) faisant saillie à partir du premier élément de liaison (22), dans lequel la vis de réglage (2222) est amenée à passer à travers la rainure de guidage de limitation (2111), et la vis de réglage (2222) s'adapte à l'écrou de réglage (2221) pour permettre à la vis de réglage (2222) d'entraîner la première partie de limitation (221) pour se déplacer le long de la rainure de guidage de limitation (2111) pour régler la distance entre le premier élément de liaison (22) et le second ensemble de liaison (30).

4. Dispositif de raccordement de réservoir interne et externe (300) selon la revendication 3, **caractérisé en ce qu'une** saillie de verrouillage (2112) est prévue de manière convexe dans le premier siège de limitation (211), et le premier élément de liaison (22) est pourvu d'une table de verrouillage (223), dans lequel la table de verrouillage (223) vient en butée contre la saillie de verrouillage (2112) lorsque la distance entre le premier élément de liaison (22) et le second ensemble de liaison (30) est réglé au maximum.

5. Réservoir intérieur et extérieur dispositif de connexion (300) selon la revendication 2, **caractérisé en ce que** le premier élément de liaison (22) est pourvu d'un premier trou traversant, le premier siège de liaison (21) est pourvu d'une pluralité de seconds trous traversants, et le premier trou traversant du premier élément de liaison (22) est aligné avec les seconds trous traversants dans différentes positions ; et
dans lequel le premier élément de liaison (22) est fixé par une vis traversant le premier trou traversant et le second trou traversant pour régler la distance entre le premier élément de liaison (22) et le second ensemble de liaison (30).

6. Dispositif de connexion de réservoir interne et externe (300) selon l'une quelconque des revendications 1 à 5, **caractérisé en ce que** la sangle de suspension (10) est sous la forme d'un anneau,
dans lequel le premier ensemble de liaison (20) comprend en outre une première broche (23), et la première broche (23) traverse le premier élément de liaison (22) ;
dans lequel le second ensemble de liaison (30) comprend un second élément de liaison (31) et une seconde broche (32), et le second élément de liaison (31) est fixé au réservoir interne (100) ; et
dans lequel la seconde broche (32) est passée à travers le second élément de liaison (31) et est fournie parallèle à la première broche (23), et deux extrémités de la sangle de suspension (10) sont manchonnées sur la première broche (23) et la seconde broche (32), et peuvent tourner autour de la première broche (23) et de la seconde broche (32).

7. Réservoir intérieur et extérieur dispositif de connexion (300) selon la revendication 6, **caractérisé en ce que** le premier ensemble de liaison (20) comprend en outre une première chemise d'arbre (24), et le second ensemble de liaison (30) comprend en outre une seconde chemise d'arbre (33), dans lequel une extrémité de la sangle de suspension (10) est manchonnée sur la première broche (23) à travers la première chemise d'arbre (24), et une autre extrémité de la sangle de suspension (10) est manchonnée sur la seconde broche (32) à travers la seconde chemise d'arbre (33).

8. Réservoir intérieur et extérieur dispositif de connexion (300) selon la revendication 7, **caractérisé en ce que** la première chemise d'arbre (24) est pourvue d'une première partie de butée (241) et d'une deuxième partie de butée (242), dans lequel la première partie de butée (241) et la deuxième partie de butée (242) sont espacées le long d'un axe de la première broche (23), et une extrémité de la sangle de suspension (10) est manchonnée entre la première partie de butée (241) et la deuxième partie de butée (242), et dans lequel la seconde chemise d'arbre (33) est pourvue d'une troisième partie de butée (331) et d'une quatrième partie de butée (332), dans lequel la troisième partie de butée (331) et la quatrième partie de butée (332) sont espacées le long d'un axe de la seconde broche (32), et une autre extrémité de la sangle de suspension (10) est manchonnée entre la troisième partie de butée (331) et la quatrième partie de butée (332).

9. Dispositif de raccordement de réservoir interne et externe (300) selon la revendication 6, **caractérisé en ce que** le second ensemble de liaison (30) comprend en outre un second siège de liaison, le second siège de liaison est pourvu d'un second siège de limitation, et le second élément de liaison (31) est pourvu d'une seconde partie de limitation (331), dans lequel la seconde partie de limitation s'adapte au second siège de limitation pour empêcher le second élément de liaison (31) de se tordre sur le second siège de liaison avec la sangle de suspension (10) comme axe de rotation, et le second élément de liaison (31) est relié au réservoir intérieur (100) par le biais du second siège de liaison.

10. Dispositif de connexion de réservoir intérieur et extérieur (300) selon l'une quelconque des revendications 1 à 9, **caractérisé en ce que** la sangle de suspension (10) est constituée d'un matériau composite en résine renforcé par des fibres.

11. Dispositif de connexion de réservoir interne et externe (300) selon la revendication 10, **caractérisé en ce que** les fibres du matériau composite en résine renforcé par des fibres sont des fibres de carbone, des fibres d'aramide ou des fibres de verre, dans lequel une résine dans le matériau composite à base de résine renforcée de fibres est une résine époxy, une résine polyamide ou une résine de polyéthylène haute densité.

12. Réservoir de stockage cryogénique, comprenant un réservoir interne (100), un réservoir externe (200) et une pluralité de dispositifs de raccordement de réservoir interne et externe (300) pour le réservoir de stockage cryogénique selon l'une quelconque des revendications 1 à 11,
**caractérisé en ce que** le réservoir externe (200) s'enroule autour du réservoir interne (100), le dispositif de raccordement de réservoir interne et externe (300) raccorde le réservoir interne (100) et le réservoir externe (200) ; et
dans lequel la pluralité de dispositifs de raccordement de réservoir interne et externe (300) sont prévus au niveau d'une partie d'extrémité du réservoir interne (100) et espacés le long d'une direction circonférentielle du réservoir interne (100), et au moins deux dispositifs de raccordement de réservoir interne et externe (300) sont prévus sur un côté supérieur d'un plan d'axe horizontal du réservoir interne (100).
